# EUROPÄISCHE PATENTANMELDUNG

(11) **EP 0 690 104 A2**
(43) Veröffentlichungstag der Anmeldung: **03.01.1996**
(21) Anmeldenummer: 95109325.1
(22) Anmeldetag: 16.06.1995
(51) Int. Cl.: C09B 67/38, C09D 11/18

(54) **Farbstoffpräparationen**

(30) Priorität: 27.06.1994 DE 4422335
(71) Anmelder: BASF Aktiengesellschaft, D-67063 Ludwigshafen (DE)
(72) Erfinder: Beck, Karin Heidrun, Dr., D-67067 Ludwigshafen (DE); Bellaire, Helmut, D-670069 Ludwigshafen (DE); Dyllick-Brenzinger, Rainer, Dr., D-69469 Weinheim (DE); Reichelt, Helmut, Dr., D-67435 Neustadt (DE)

(57) **Zusammenfassung**

Wasserfreie Farbstoffpräparationen, enthalten, jeweils bezogen auf das Gewicht der Farbstoffpräparationen,
a) 1 bis 50 Gew.-% mindestens eines Farbstoffs aus der Klasse der Monoazofarbstoffe, die frei sind von ionischen Gruppen und die, sofern sie polymerisierbare Gruppen im Molekül aufweisen, in monomerer Form vorliegen, der Anthrachinonfarbstoffe, der Cumarinfarbstoffe oder der Methinfarbstoffe, und
b) 50 bis 99 Gew.-% mindestens eines Harzes,
ein Verfahren zu ihrer Herstellung, ihre Verwendung zur Herstellung von Kugelschreiberpasten sowie Kugelschreiberpasten.

## Beschreibung

Die vorliegende Erfindung betrifft neue wasserfreie Farbstoffpräparationen, enthaltend, jeweils bezogen auf das Gewicht der Farbstoffpräparation,
a) 1 bis 50 Gew.-% mindestens eines Farbstoffs aus der Klasse der Monoazofarbstoffe, die frei sind von ionischen Gruppen und die, sofern sie polymerisierbare Gruppen im Molekül aufweisen, in monomerer Form vorliegen, der Anthrachinonfarbstoffe, der Cumarinfarbstoffe oder der Methinfarbstoffe, und
b) 50 bis 99 Gew.-% mindestens eines Harzes,
ein Verfahren zu ihrer Herstellung, ihre Verwendung zur Herstellung von Kugelschreiberpasten sowie Kugelschreiberpasten.

Als Farbstoffe für Kugelschreiberpasten kommen in der Regel basische Farbstoffe, z.B. Triarylmethanfarbstoffe oder Kupferphthalocyaninfarbstoffe zur Anwendung.

Auch die Anwendung von Azofarbstoffen ist bekannt. So beschreibt beispielsweise die DE-C-1 264 651 die Anwendung von polymeren Azofarbstoffen für diesen Zweck. Weiterhin sind aus der US-A-5 205 838 Disazofarbstoffe mit einer phenolischen Kupplungskomponente bekannt.

Aufgabe der vorliegenden Erfindung war es, neue wasserfreie Farbstoffpräparationen bereitzustellen, die sich vorteilhaft zur Herstellung von Kugelschreiberpasten eignen. Die neuen Präparationen sollten als Farbmittel Farbstoffe aus der Reihe der monomeren Monoazofarbstoffe, die frei von ionischen Gruppen sind, der Anthrachinonfarbstoffe, der Cumarinfarbstoffe oder der Methinfarbstoffe enthalten.

Demgemäß wurden die eingangs näher bezeichneten wasserfreien Farbstoffpräparationen gefunden.

Geeignete Monoazofarbstoffe sind z.B. solche mit einer Diazokomponente, die sich von einem Anilin oder von einem fünfgliedrigen aromatischen heterocyclischen Amin ableitet, das ein bis drei Heteroatome, ausgewählt aus der Gruppe, bestehend aus Stickstoff, Sauerstoff und Schwefel, im heterocyclischen Ring aufweist und durch einen Benzol-, Thiophen-, Pyridin- oder Pyrimidinring anelliert sein kann.

Wichtige Monoazofarbstoffe sind beispielsweise solche, deren Diazokomponente sich z.B. von einem Anilin oder von einem heterocyclischen Amin aus der Pyrrol-, Furan-, Thiophen-, Pyrazol-, Imidazol-, Oxazol-, Isoxazol-, Thiazol-, Isothiazol-, Triazol-, Oxadiazol-, Thiadiazol-, Benzofuran-, Benzthiophen-, Benzimidazol-, Benzoxazol-, Benzthiazol-, Benzisothiazol-, Pyridothiophen-, Pyrimidothiophen-, Thienothiophen- oder Thienothiazolreihe ableitet.

Besonders zu nennen sind solche Diazokomponenten, die von einem Anilin oder von einem heterocyclischen Amin aus der Pyrrol-, Thiophen-, Pyrazol-, Thiazol-, Isothiazol-, Triazol-, Thiadiazol-, Benzthiophen-, Benzthiazol-, Benzisothiazol-, Pyridothiophen-, Pyrimidothiophen-, Thienothiophen- oder Thienothiazolreihe stammen.

Von Bedeutung sind weiterhin Monoazofarbstoffe mit einer Kupplungskomponente aus der Anilin-, Aminonaphthalin-, Aminothiazol-, Diaminopyridin- oder Hydroxypyridonreihe.

Von besonderer Bedeutung sind Monoazofarbstoffe der Formel I

D―N=N―K (I),

in der
- D: für einen Rest der Formel 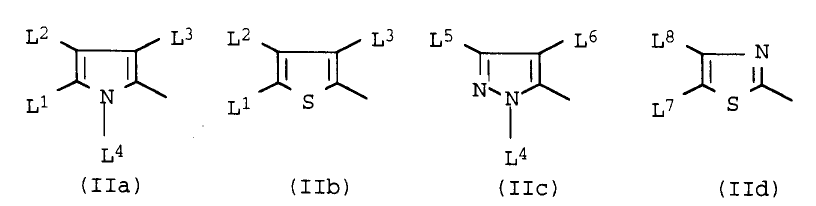 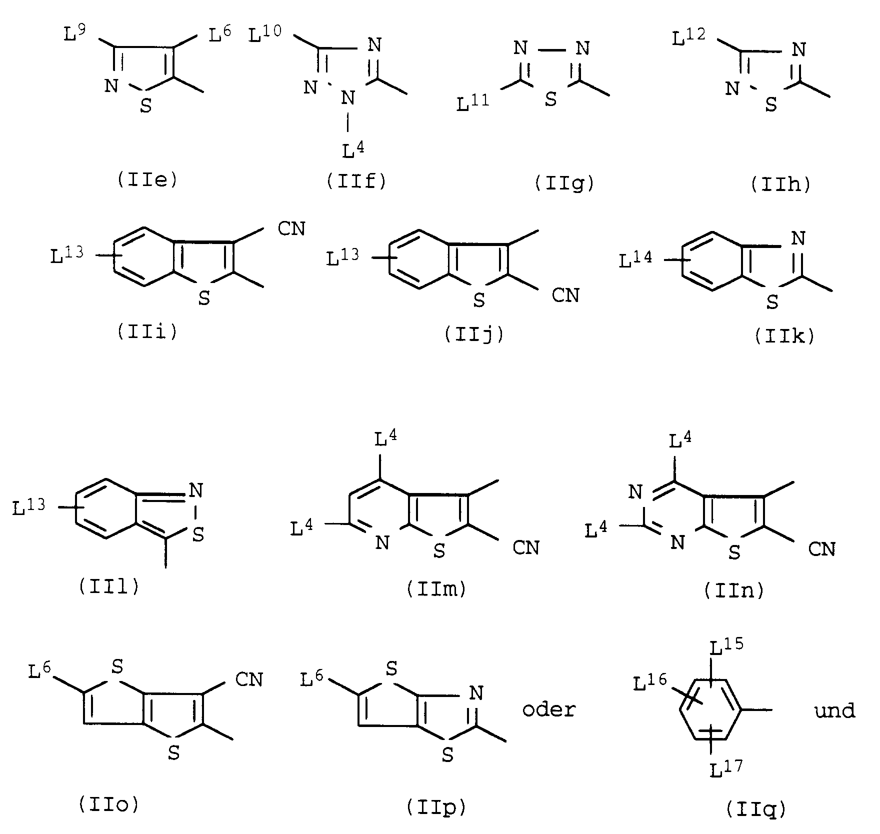
- K: für einen Rest der Formel 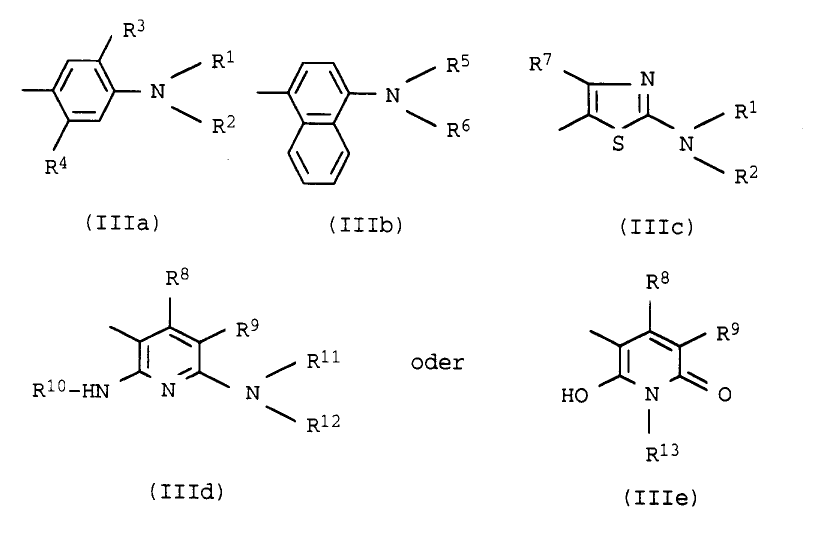
stehen, worin
- L¹: Nitro, Cyano, C₁-C₆-Alkanoyl, Benzoyl, C₁-C₆-Alkylsulfonyl, gegebenenfalls substituiertes Phenylsulfonyl oder einen Rest der Formel -CH=T, worin T die Bedeutung von Hydroxyimino, C₁-C₄-Alkoxyimino oder eines Restes einer CH-aciden Verbindung besitzt,
- L²: Wasserstoff, C₁-C₆-Alkyl, Halogen, Hydroxy, Mercapto, gegebenenfalls durch Phenyl oder C₁-C₄-Alkoxy substituiertes C₁-C₆-Alkoxy, gegebenenfalls substituiertes Phenoxy, gegebenenfalls durch Phenyl substituiertes C₁-C₆-Alkylthio, gegebenenfalls substituiertes Phenylthio, C₁-C₆-Alkylsulfonyl oder gegebenenfalls substituiertes Phenylsulfonyl,
- L³: Cyano, C₁-C₄-Alkoxycarbonyl oder Nitro,
- L⁴: Wasserstoff, C₁-C₆-Alkyl oder Phenyl,
- L⁵: C₁-C₆-Alkyl oder Phenyl,
- L⁶: Wasserstoff, Cyano, C₁-C₄-Alkoxycarbonyl, C₁-C₆-Alkanoyl, Thiocyanato oder Halogen,
- L⁷: Nitro, Cyano, C₁-C₆-Alkanoyl, Benzoyl, C₁-C₄-Alkoxycarbonyl, C₁-C₆-Alkylsulfonyl, gegebenenfalls substituiertes Phenylsulfonyl oder einen Rest der Formel -CH=T, worin T die obengenannte Bedeutung besitzt,
- L⁸: Wasserstoff, C₁-C₆-Alkyl, Cyano, Halogen, gegebenenfalls durch Phenyl oder C₁-C₄-Alkoxy substituiertes C₁-C₆-Alkoxy, gegebenenfalls durch Phenyl substituiertes C₁-C₆-Alkylthio, gegebenenfalls substituiertes Phenylthio, C₁-C₆-Alkylsulfonyl, gegebenenfalls substituiertes Phenylsulfonyl oder C₁-C₄⁻Alkoxycarbonyl,
- L⁹: Cyano, gegebenenfalls durch Phenyl substituiertes C₁-C₆-Alkyl, gegebenenfalls durch Phenyl substituiertes C₁-C₆-Alkylthio, gegebenenfalls substituiertes Phenyl, Thienyl, C₁-C₄-Alkylthienyl, Pyridyl oder C₁-C₄-Alkylpyridyl,
- L¹⁰: Phenyl oder Pyridyl,
- L¹¹: Trifluormethyl, Nitro, C₁-C₆-Alkyl, Phenyl, gegebenenfalls durch Phenyl substituiertes C₁-C₆-Alkylthio oder C₁-C₆-Dialkylamino,
- L¹²: C₁-C₆-Alkyl, Phenyl, 2-Cyanoethylthio oder 2-(C₁-C₄-Alkoxycarbonyl)ethylthio,
- L¹³: Wasserstoff, Nitro oder Halogen,
- L¹⁴: Wasserstoff, Cyano, C₁-C₄-Alkoxycarbonyl, Nitro oder Halogen,
- L¹⁵, L¹⁶ und L¹⁷: gleich oder verschieden sind und unabhängig voneinander jeweils Wasserstoff, C₁-C₆-Alkyl, C₁-C₆-Alkoxy, Halogen, Nitro, Cyano, gegebenenfalls substituiertes C₁-C₄-Alkoxycarbonyl, C₁-C₆-Alkylsulfonyl oder gegebenenfalls substituiertes Phenylsulfonyl,
- R¹ und R²: gleich oder verschieden sind und unabhängig voneinander jeweils Wasserstoff, gegebenenfalls substituiertes C₁-C₆-Alkyl, das durch 1 oder 2 Sauerstoffatome in Etherfunktion unterbrochen sein kann, C₅-C₇-Cycloalkyl oder C₃-C₆-Alkenyl,
- R³: Wasserstoff, C₁-C₆-Alkyl oder C₁-C₆-Alkoxy,
- R⁴: Wasserstoff, C₁-C₆-Alkyl, C₁-C₆-Alkoxy, C₁-C₆-Alkylsulfonylamino, gegebenenfalls substituiertes C₁-C₆-Alkanoylamino oder Benzoylamino,
- R⁵ und R⁶: gleich oder verschieden sind und unabhängig voneinander jeweils Wasserstoff oder C₁-C₆-Alkyl,
- R⁷: Wasserstoff, gegebenenfalls substituiertes Phenyl oder Thienyl,
- R⁸: Wasserstoff oder C₁-C₆-Alkyl,
- R⁹: Cyano, Carbamoyl oder Acetyl,
- R¹⁰, R¹¹ und R¹²: gleich oder verschieden sind und unabhängig voneinander jeweils gegebenenfalls substituiertes C₁-C₁₂-Alkyl, das durch 1 bis 3 Sauerstoffatome in Etherfunktion unterbrochen sein kann, C₅-C₇-Cycloalkyl, gegebenenfalls substituiertes Phenyl, C₃-C₆-Alkenyl, gegebenenfalls substituiertes Benzoyl, C₁-C₈-Alkanoyl, C₁-C₆-Alkylsulfonyl oder gegebenenfalls substituiertes Phenylsulfonyl oder R¹¹ und R¹² zusammen mit dem sie verbindenden Stickstoffatom einen 5- oder 6-gliedrigen gesättigten heterocyclischen Rest, der gegebenenfalls weitere Heteroatome enthält, und
- R¹³: Wasserstoff oder C₁-C₆-Alkyl bedeuten.

Geeignete Anthrachinonfarbstoffe gehorchen z.B. der Formel IVa, IVb, IVc oder IVd 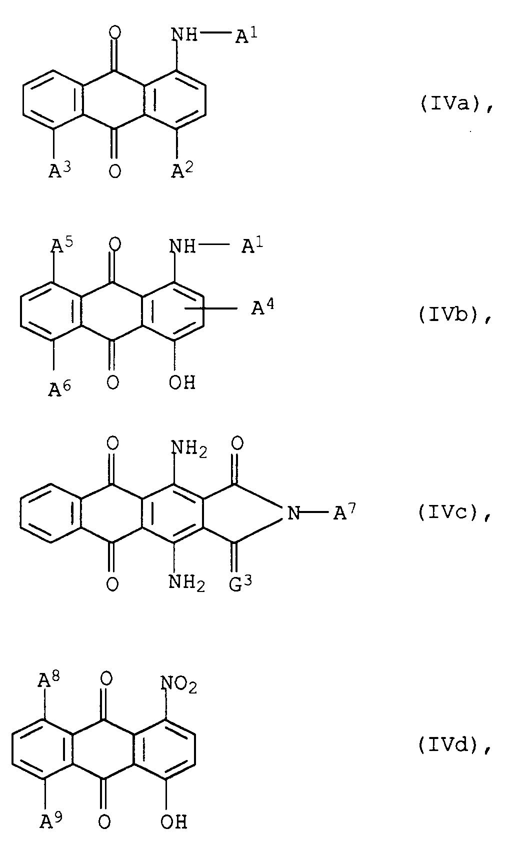
worin
- A¹: Wasserstoff, C₁-C₈-Alkyl oder gegebenenfalls substituiertes Phenyl,
- A²: Hydroxy oder den Rest NH-A¹,
- A³: Wasserstoff oder Nitro,
- A⁴: Halogen, Hydroxyphenyl, C₁-C₄-Alkoxyphenyl oder einen Rest der Formel 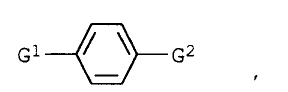 worin
- G¹: für Sauerstoff oder Schwefel und
- G²: für Wasserstoff oder C₁-C₈-Monoalkylsulfamoyl, dessen Alkylkette durch 1 oder 2 Sauerstoffatome in Etherfunktion unterbrochen sein kann, stehen,
einer der beiden Reste A⁵ und A⁶ Hydroxy und der andere den Rest NH-A¹
- A⁷: Wasserstoff oder C₁-C₈-Alkyl, das gegebenenfalls durch 1 bis 3 Sauerstoffatome in Etherfunktion unterbrochen ist,
einer der beiden Reste A⁸ und A⁹ Hydroxy und der andere Anilin und
- G³: Sauerstoff oder Imino bedeuten.

Geeignete Cumarinfarbstoffe gehorchen z.B. der Formel Va, Vb oder Vc 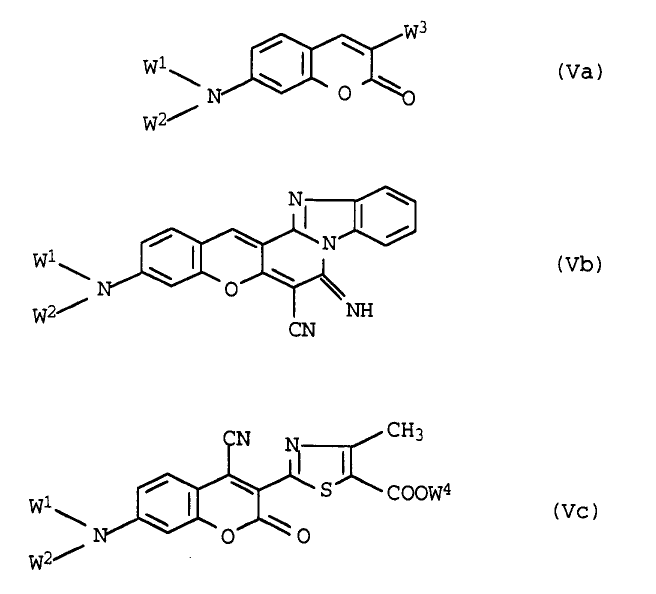
worin
- W¹ und W²: unabhängig voneinander jeweils C₁-C₄-Alkyl,
- W³: Benzimidazol-2-yl, 5-Chlorbenzoxazol-2-yl, Benzthiazol-2-yl, 4-Hydroxychinazolin-2-yl oder 5-Phenyl-1,3,4-thiadiazol-2-yl und
- W⁴: C₁-C₈-Alkyl bedeuten.

Geeignete Methinfarbstoffe gehorchen z.B. der Formel VIa oder VIb 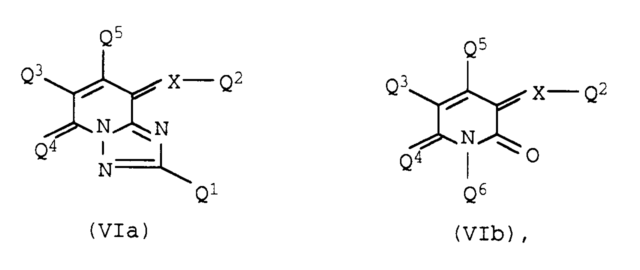
worin
- X: Stickstoff oder CH,
- Q¹: C₁-C₂₀-Alkyl, das gegebenenfalls substituiert ist und durch ein oder mehrere Sauerstoffatome in Etherfunktion unterbrochen sein kann, gegebenenfalls substituiertes Phenyl oder Hydroxy,
- Q²: einen 5-gliedrigen aromatischen heterocyclischen Rest,
- Q³: Wasserstoff, Cyano, Carbamoyl, Carboxyl oder C₁-C₄-Alkoxycarbonyl,
- Q⁴: Sauerstoff oder einen Rest der Formel C(CN)₂, C(CN)COOE¹ oder C(COOE¹)₂, wobei E¹ jeweils für C₁-C₈-Alkyl, das gegebenenfalls durch 1 oder 2 Sauerstoffatome in Etherfunktion unterbrochen ist, steht,
- Q⁵: Wasserstoff oder C₁-C₄-Alkyl,
- Q⁶: C₁-C₂₀-Alkyl, das gegebenenfalls substituiert ist und durch ein oder mehrere Sauerstoffatome in Etherfunktion unterbrochen sein kann, gegebenenfalls substituiertes Phenyl, Hydroxy oder einen Rest der Formel NE²E³, wobei E² und E³ gleich oder verschieden sind und unabhängig voneinander jeweils für Wasserstoff, gegebenenfalls substituiertes C₁-C₁₂-Alkyl, C₅-C₇-Cycloalkyl, gegebenenfalls substituiertes Phenyl, gegebenenfalls substituiertes Pyridyl, gegebenenfalls substituiertes C₁-C₁₂-Alkanoyl, C₁-C₁₂-Alkoxycarbonyl, gegebenenfalls substituiertes C₁-C₁₂-Alkylsulfonyl, C₅-C₇-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder E² und E³ zusammen mit dem sie verbindenden Stickstoffatom gegebenenfalls durch C₁-C₄-Alkyl substituiertes Succinimido, gegebenenfalls durch C₁-C₄-Alkyl substituiertes Phthalimido oder einen fünf-oder sechsgliedrigen gesättigten heterocyclischen Rest, der gegebenenfalls weitere Heteroatome enthält, stehen, bedeuten.

Die Farbstoffe der Formel VIa oder VIb können in mehreren tautomeren Formen auftreten, die alle von den Patentansprüchen umfaßt werden. Beispielsweise können die Verbindungen der Formel VIa (mit Q⁴ = Sauerstoff und Q⁵ = Methyl) u.a. in folgenden tautomeren Formen auftreten: 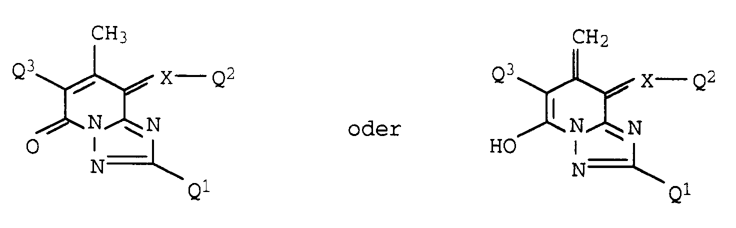
Reste Q² können sich z.B. von Komponenten aus Pyrrol-, Thiazol-, Thiophen- oder Indolreihe ableiten.

Wichtige Reste Q² sind z.B. solche der Formeln VIIa bis VIId 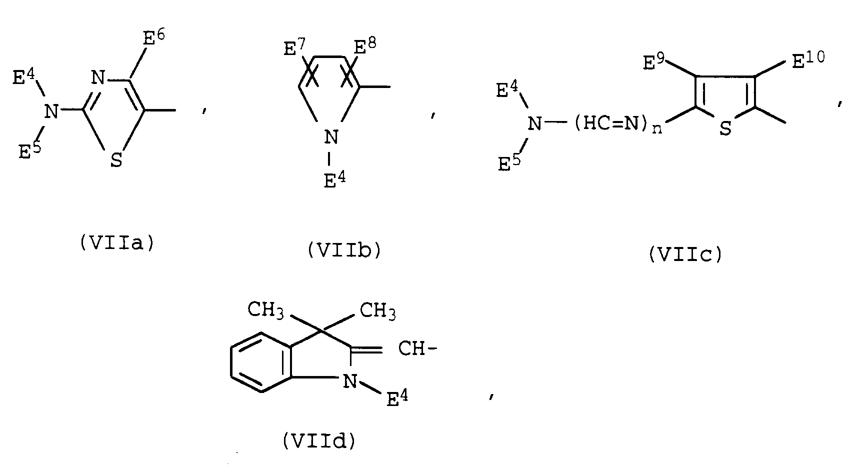
worin
- n: 0 oder 1,
- E⁴ und E⁵: gleich oder verschieden sind und unabhängig voneinander jeweils Wasserstoff oder mit Ausnahme von Hydroxy auch den obengenannten Rest R¹ oder zusammen mit dem sie verbindenden Stickstoffatom einen 5- oder 6-gliedrigen gesättigten heterocyclischen Rest, der gegebenenfalls weitere Heteroatome aufweist,
- E⁶: Wasserstoff, Halogen, C₁-C₈-Alkyl, gegebenenfalls durch C₁-C₄-Alkyl oder C₁-C₄-Alkoxy substituiertes Phenyl, gegebenenfalls durch C₁-C₄-Alkyl oder C₁-C₄-Alkoxy substituiertes Benzyl, Cyclohexyl, Thienyl, Hydroxy oder C₁-C₈-Monoalkylamino,
- E⁷ und E⁸: unabhängig voneinander jeweils Wasserstoff, Hydroxy, gegebenenfalls durch Phenyl oder C₁-C₄-Alkylphenyl substituiertes C₁-C₈-Alkyl, gegebenenfalls durch Phenyl oder C₁-C₄-Alkylphenyl substituiertes C₁-C₈-Alkoxy, C₁-C₈-Alkanoylamino, C₁-C₈-Alkylsulfonylamino oder C₁-C₈-Mono- oder Dialkylaminosulfonylamino,
- E⁹: Cyano, Carbamoyl, C₁-C₈-Mono- oder Dialkylcarbamoyl, C₁-C₈-Alkoxycarbonyl oder gegebenenfalls substituiertes Phenyl und
- E¹⁰: Halogen, Wasserstoff, C₁-C₄-Alkyl, C₁-C₄-Alkoxy, C₁-C₄-Alkylthio, gegebenenfalls durch C₁-C₄-Alkyl oder C₁-C₄-Alkoxy substituiertes Phenyl oder Thienyl bedeuten.

Alle in den obengenannten Formeln auftretenden Alkyl- oder Alkenylgruppen können sowohl geradkettig als auch verzweigt sein.

Wenn in den obengenannten Formeln substituierte Alkylreste auftreten, so können als Substituenten, sofern nicht anders vermerkt, z.B. Cyclohexyl, Phenyl, C₁-C₄-Alkylphenyl, C₁-C₄-Alkoxyphenyl, Halogenphenyl, C₁-C₈-Alkanoyloxy, C₁-C₈-Alkylaminocarbonyloxy, C₁-C₂₀-Alkoxycarbonyl, C₁-C₂₀-Alkoxycarbonyloxy, wobei die Alkylkette der drei letztgenannten Reste gegebenenfalls durch 1 bis 4 Sauerstoffatome in Etherfunktion unterbrochen und/oder durch Phenyl oder Phenoxy substituiert ist, Cyclohexyloxy, Phenoxy, Halogen, Hydroxy oder Cyano in Betracht kommen. Die Alkylreste weisen dabei in der Regel 1 oder 2 Substituenten auf.

Wenn in den obengenannten Formeln Alkylreste auftreten, die durch Sauerstoffatome in Etherfunktion unterbrochen sind, so sind, sofern nicht anders vermerkt, solche Alkylreste bevorzugt, die durch 1 bis 4 Sauerstoffatome, insbesondere 1 bis 2 Sauerstoffatome, in Etherfunktion unterbrochen sind.

Wenn in den obengenannten Formeln substituierte Phenyl- oder Pyridylreste auftreten, so können als Substituenten, sofern nicht anders vermerkt, z.B. C₁-C₈-Alkyl, C₁-C₈-Alkoxy, Halogen, dabei insbesondere Chlor oder Brom, Nitro oder Carboxyl in Betracht kommen. Die Phenyl- oder Pyridylreste weisen dabei in der Regel 1 bis 3 Substituenten auf.

Es folgen beispielhafte Aufzählungen für die Reste in den Formeln I bis III.

Reste L², L⁴, L⁵, L⁸, L⁹, L¹¹, L¹², L¹⁵, L¹⁶, L¹⁷, R¹, R², R³, R⁴, R⁵, R⁶, R⁸, R¹⁰, R¹¹, R¹² und R¹³ sind z.B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste L⁹ sind weiterhin z.B. Benzyl oder 1- oder 2-Phenylethyl.

Reste L², L⁸, L⁹ und L¹¹ sind weiterhin z.B. Methylthio, Ethylthio, Propylthio, Isopropylthio, Butylthio, Isobutylthio, Pentylthio, Hexylthio, Benzylthio oder 1- oder 2-Phenylethylthio.

Reste L² und L⁸ sind weiterhin z.B. Phenylthio, 2-Methylphenylthio, 2-Methoxyphenylthio oder 2-Chlorphenylthio.

Reste L², L⁸, L¹⁵, L¹⁶, L¹⁷, R³ und R⁴ sind weiterhin z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy oder 2-Methylpentyloxy.

Reste L⁶ sind, wie weiterhin auch Reste L², L⁸, L¹³, L¹⁴, L¹⁵, L¹⁶ und L¹⁷, z.B. Fluor, Chlor oder Brom.

Reste L⁷ sind, wie weiterhin auch Reste L¹, L², L⁸, L¹⁵, L¹⁶, L¹⁷, R¹⁰, R¹¹ und R¹², z.B. Methylsulfonyl, Ethylsulfonyl, Propylsulfonyl, Isopropylsulfonyl, Butylsulfonyl, Isobutylsulfonyl sec-Butylsulfonyl, Pentylsulfonyl, Isopentylsulfonyl, Neopentylsulfonyl, Hexylsulfonyl, Phenylsulfonyl, 2-Methylphenylsulfonyl, 2-Methoxyphenylsulfonyl oder 2-Chlorphenylsulfonyl.

Reste L³ sind, wie weiterhin auch Reste L⁶, L⁷, L⁸, L¹⁴, L¹⁵, L¹⁶ und L¹⁷, z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste L² und L⁸ sind weiterhin z.B. 2-Methoxyethoxy, 2-Ethoxyethoxy, 2- oder 3-Methoxypropoxy, 2- oder 3-Ethoxypropoxy, 2- oder 4-Methoxybutoxy, 2- oder 4-Ethoxybutoxy, 5-Methoxypentyloxy, 5-Ethoxypentyloxy, 6-Methoxyhexyloxy, 6-Ethoxyhexyloxy, Benzyloxy oder 1- oder 2-Phenylethoxy.

Reste L¹¹ sind weiterhin z.B. Dimethylamino, Diethylamino, Dipropylamino, Diisopropylamino, Dibutylamino, Dipentylamino, Dihexylamino oder N-Methyl-N-ethylamino.

Reste L¹² sind weiterhin z.B. 2-Methoxycarbonylethylthio oder 2-Ethoxycarbonylethylthio.

Reste R¹, R², R¹¹, R¹² und R¹³ sind weiterhin z.B. Cyclopentyl, Cyclohexyl oder Cycloheptyl.

Reste L⁹ sind weiterhin z.B. Phenyl, 2-, 3- oder 4-Methylphenyl, 2,4-Dimethylphenyl, 2-, 3- oder 4-Methoxyphenyl, 2-, 3- oder 4-Chlorphenyl, 2- oder 3-Methylthienyl oder 2-, 3- oder 4-Methylpyridyl.

Reste L¹, L⁶ und L⁷ sind weiterhin z.B. Formyl, Acetyl, Propionyl, Butyryl, Pentanoyl oder Hexanoyl.

Wenn L¹ oder L⁷ für den Rest -CH=T stehen, worin T sich von einer CH-aciden Verbindung H₂T ableitet, können als CH-acide Verbindungen H₂T z.B. Verbindungen der Formel 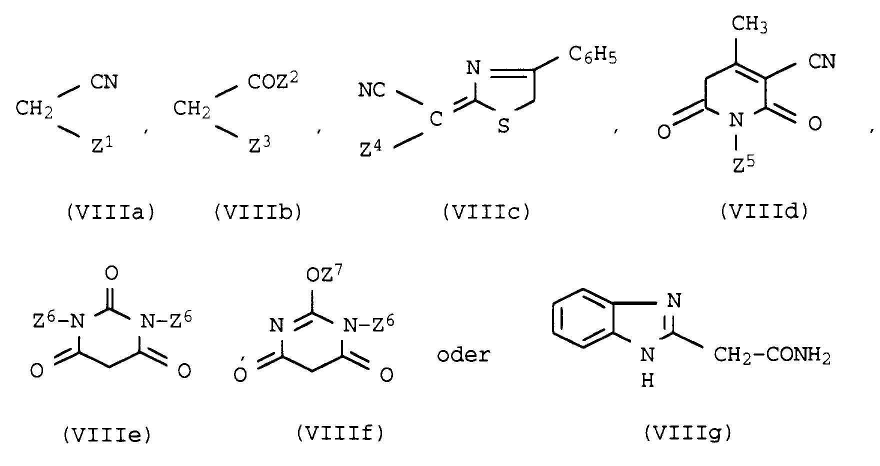
in Betracht kommen, wobei
- Z¹: Cyano, Nitro, C₁-C₄-Alkanoyl, gegebenenfalls substituiertes Benzoyl, C₁-C₄-Alkylsulfonyl, gegebenenfalls substituiertes Phenylsulfonyl, C₁-C₄-Alkoxycarbonyl, C₃-C₄-Alkenyloxycarbonyl, Phenoxycarbonyl, Carbamoyl, C₁-C₄-Mono- oder Dialkylcarbamoyl, gegebenenfalls substituiertes Phenylcarbamoyl, gegebenenfalls substituiertes Phenyl, Benzthiazol-2-yl, Benzimidazol-2-yl, 5-Phenyl-1,3,4-thiadiazol-2-yl oder 2-Hydroxychinoxalin-3-yl,
- Z²: C₁-C₄-Alkyl, C₁-C₄-Alkoxy oder C₃-C₄-Alkenyloxy,
- Z³: C₁-C₄-Alkoxycarbonyl, C₃-C₄-Alkenyloxycarbonyl, Phenylcarbamoyl oder Benzimidazol-2-yl,
- Z⁴: Cyano, C₁-C₄-Alkoxycarbonyl oder C₃-C₄-Alkenyloxycarbonyl,
- Z⁵: Wasserstoff oder C₁-C₆-Alkyl,
- Z⁶: Wasserstoff, C₁-C₄-Alkyl oder Phenyl und
- Z⁷: C₁-C₄-Alkyl bedeuten.

Dabei ist der Rest, der sich von Verbindungen der Formel VIIIa, VIIIb oder VIIIc ableitet, worin Z¹ Cyano, C₁-C₄-Alkanoyl, C₁-C₄-Alkoxycarbonyl oder C₃-C₄-Alkenyloxycarbonyl, Z² C₁-C₄-Alkyl, C₁-C₄-Alkoxy oder C₃-C₄-Alkenyloxy, Z³ C₁-C₄-Alkoxycarbonyl oder C₃-C₄-Alkenyloxycarbonyl und Z⁴ Cyano bedeuten, hervorzuheben.

Besonders hervorzuheben ist dabei der Rest der sich von Verbindungen der Formel VIIIa, VIIIb oder VIIIc ableitet, worin Z¹ Cyano, C₁-C₄-Alkoxycarbonyl oder C₃-C₄-Alkenyloxycarbonyl, Z² C₁-C₄-Alkoxy oder C₂-C₄-Alkenyloxy, Z³ C₁-C₄-Alkoxycarbonyl oder C₃-C₄-Alkenyloxycarbonyl und Z⁴ Cyano bedeuten.

Reste R¹⁰, R¹¹ und R¹² sind weiterhin z.B. Heptyl, Octyl, 2-Ethylhexyl, Nonyl, Decyl, Undecyl, Dodecyl, 4,7-Dioxanonyl, 4,8-Dioxadecyl, 4,6-Dioxaundecyl, 3,6,9-Trioxaundecyl, 4,7,10-Trioxaundecyl oder 4,7,10-Trioxadodecyl.

Reste R¹, R², R¹⁰, R¹¹ und R¹² sind weiterhin z.B. 2-Methoxyethyl, 2-Ethoxyethyl, 2-Propoxyethyl, 2-Butoxyethyl, 2-Isobutoxyethyl, 2- oder 3-Methoxypropyl, 1-Methoxyprop-2-yl, 2- oder 3-Ethoxypropyl oder 2- oder 3-Propoxypropyl, 3,6-Dioxaheptyl, 3,6-Dioxaoctyl, 4,7-Dioxaoctyl, 2-Hydroxyethyl, 3-Hydroxypropyl, 4-Hydroxybutyl, 2-Cyclohexyloxyethyl, 2- oder 3-Cyclohexyloxypropyl, 2- oder 4-Cyclohexyloxybutyl, 2-Phenoxyethyl, 2-Phenoxypropyl, 3-Phenoxypropyl, 4-Phenoxybutyl, 2-Methoxycarbonylethyl, 2-Ethoxycarbonylethyl, 2- oder 3-Methoxycarbonylpropyl, 2- oder 3-Ethoxycarbonylpropyl, 2- oder 3-Butoxycarbonylpropyl, 4-Methoxycarbonylbutyl, 4-Ethoxycarbonylbutyl, 2-Cyanoethyl, 2- oder 3-Cyanopropyl, 4-Cyanobutyl, 2-Cyclohexylethyl, 2- oder 3-Cyclohexylpropyl, Benzyl, 1- oder 2-Phenylethyl, 2-Acetyloxyethyl, 2-Propionyloxyethyl, 2- oder 3-Acetyloxypropyl, Prop-2-en-1-yl, 2-Methyl-prop-2-en-1-yl, But-2-en-1-yl oder But-3-en-1-yl.

Wenn die Reste R¹¹ und R¹² zusammen mit dem sie verbindenden Stickstoffatom einen fünf- oder sechsgliedrigen gesättigten heterocyclischen Rest, der gegebenenfalls weitere Heteroatome enthält, bedeuten, so kommen dafür z.B. Pyrrolidinyl, Piperidinyl, Morpholinyl, Thiomorpholinyl, Thiomorpholinyl-S,S-dioxid, Piperazinyl oder N-(C₁-C₄-Alkyl)piperazinyl, wie N-Methyl- oder N-Ethylpiperazinyl, in Betracht.

Reste R¹⁰, R¹¹ und R¹² sind weiterhin z.B. Formyl, Acetyl, Propionyl, Butyryl, Isobutyryl, Pentanoyl, Hexanoyl, Heptanoyl, Octanoyl, 2-Ethylhexanoyl, Benzoyl, 2-, 3- oder 4-Methylbenzoyl, 2-, 3- oder 4-Methoxybenzoyl oder 2-, 3- oder 4-Chlorbenzoyl.

Es folgen beispielhafte Aufzählungen für die Reste in den Formeln IVa bis IVd.

Geeignete Reste A¹ und A⁷ sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, 1-Ethylpentyl, Octyl, 2-Ethylhexyl oder Isooctyl.

Reste A⁷ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl, 4,8-Dioxadecyl, 3,6,9-Trioxadecyl oder 3,6,9-Trioxaundecyl,

Reste A¹ sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl oder 2,4-Dimethoxyphenyl.

Reste A⁴ sind z.B. Fluor, Chlor, Brom, 2-, 3- oder 4-Methoxyphenyl oder 2-, 3- oder 4-Ethoxyphenyl.

Reste G² sind z.B. Methylsulfamoyl, Ethylsulfamoyl, Propylsulfamoyl, Isopropylsulfamoyl, Butylsulfamoyl, Isobutylsulfamoyl, sec-Butylsulfamoyl, Pentylsulfamoyl, Hexylsulfamoyl, Heptylsulfamoyl, Octylsulfamoyl, Isooctylsulfamoyl, 2-Ethylhexylsulfamoyl, 2-Methoxyethylsulfamoyl, 2-Ethoxyethylsulfamoyl oder 2,5-Dioxaheptylsulfamoyl.

Es folgen beispielhaft Aufzählungen für die Reste in den Formeln Va bis Vc.

Geeignete Reste W¹, W² und W⁴ z.B. Methyl, Ethyl, Propyl, Isopropyl, Butyl, Isobutyl, sec-Butyl oder tert-Butyl.

Reste W⁴ sind weiterhin z.B. Pentyl, Isopentyl, Neopentyl, tert-Pentyl, Hexyl, 2-Methylpentyl, Heptyl, 1-Ethylpentyl, Octyl, 2-Ethylhexyl oder Isooctyl.

Es folgen beispielhafte Aufzählungen für die Reste in den Formeln VIa und VIb.

Geeignete Reste Q¹, Q⁵, Q⁶, E¹, E², E³, E⁴, E⁵, E⁶, E⁷, E⁸ und E¹⁰ sind z.B. Methyl, Ethyl, Propyl, Isopropyl, Butyl, Isobutyl, sec-Butyl oder tert-Butyl.

Reste Q¹, Q⁶, E¹, E², E³, E⁴, E⁵, E⁶, E⁷ und E⁸ sind weiterhin z.B. Pentyl, Isopentyl, Neopentyl, tert-Pentyl, Hexyl, 2-Methylpentyl, Heptyl, 1-Ethylpentyl, Octyl, 2-Ethylhexyl oder Isooctyl.

Reste Q¹, E² und E³ sind weiterhin z.B. Nonyl, Isononyl, Decyl, Isodecyl, Undecyl oder Dodecyl.

Reste Q¹ sind weiterhin z.B. Tridecyl, Isotridecyl, Tetradecyl, Pentadecyl, Hexadecyl, Heptadecyl, Octadecyl, Nonadecyl, Eicosyl (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436.), 2-Methoxycarbonylethyl, Benzyl, 1- oder 2-Phenylethyl, 3-Benzyloxypropyl, Phenoxymethyl, 6-Phenoxy-4-oxahexyl, 8-Phenoxy-4-oxaoctyl, 2-, 3- oder 4-Chlorphenyl oder 2-, 3- oder 4-Carboxyphenyl.

Reste Q¹ und E¹ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl oder 4,8-Dioxadecyl.

Reste Q¹ sind weiterhin z.B. 3,6,9-Trioxadecyl, 3,6,9-Trioxaundecyl, 3,6,9-Trioxadodecyl, 3,6,9,12-Tetraoxatridecyl, 3,6,9,12-Tetraoxatetradecyl, 11-Oxahexadecyl, 13-Butyl-11-oxaheptadecyl oder 4,11-Dioxapentadecyl.

Reste Q³, E², E³ und E⁹ sind z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste E⁹ sind weiterhin z.B. Mono- oder Dimethylcarbamoyl, Mono- oder Diethylcarbamoyl, Mono- oder Dipropylcarbamoyl, Mono- oder Diisopropylcarbonyl, Mono- oder Dibutylcarbamoyl oder N-Methyl-N-butylcarbamoyl.

Reste E⁷, E⁸ und E¹⁰ sind weiterhin z.B. Methoxy, Ethoxy, Propoxy, Isopropoxy, Butoxy, Isobutoxy oder sec-Butoxy.

Reste E¹⁰ sind weiterhin z.B. Methylthio, Ethylthio, Propylthio, Isopropylthio, Butylthio, Isobutylthio oder sec-Butylthio.

Reste Q¹, E², E³ und E¹⁰ sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl oder 2,4-Dimethoxyphenyl.

Reste Q¹, E² und E³ sind weiterhin z.B. 2-Hydroxyethyl, 2- oder 3-Hydroxypropyl, 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl oder 2- oder 3-(2-Ethoxyethoxycarbonyloxy)propyl.

Reste E² und E³ sind weiterhin z.B. Pyridyl, 2-, 3- oder 4-Methylpyridyl, 2-, 3- oder 4-Methoxypyridyl, Formyl, Acetyl, Propionyl, Butyryl, Isobutyryl, Pentanoyl, Hexanoyl, Heptanoyl, Octanoyl, 2-Ethylhexanoyl, Methylsulfonyl, Ethylsulfonyl, Propylsulfonyl, Isopropylsulfonyl, Butylsulfonyl, Cyclopentylsulfonyl, Cyclohexylsulfonyl, Cycloheptylsulfonyl, Phenylsulfonyl, Tolylsulfonyl, Pyridylsulfonyl, Benzoyl, 2-, 3- oder 4-Methylbenzoyl, 2-, 3- oder 4-Methoxybenzoyl, Thien-2-ylcarbonyl, Thien-3-ylcarbonyl, Cyclopentyl, Cyclohexyl oder Cycloheptyl.

Wenn E² und E³ oder E⁴ und E⁵ zusammen mit dem sie verbindenden Stickstoffatom einen 5- oder 6-gliedrigen gesättigten heterocyclischen Rest, der gegebenenfalls weitere Heteroatome aufweist, bedeuten, so können dafür z.B. Pyrrolidinyl, Piperidinyl, Morpholinyl, Piperazinyl oder N-(C₁-C₄-Alkyl)piperazinyl in Betracht kommen.

Besonders geeignete Monoazofarbstoffe sind solche der Formel I, in der D einen Rest der Formel IIb bedeutet.

Besonders geeignete Monoazofarbstoffe sind weiterhin solche der Formel I, in der K einen Rest der Formel IIIa oder IIId bedeutet.

Besonders hervorzuheben sind Monoazofarbstoffe der Formel Ia 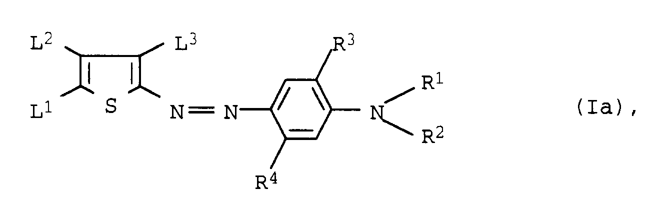
in der
- L¹: Nitro, Cyano, C₁-C₆-Alkanoyl oder einen Rest der Formel -CH=T, worin T die Bedeutung eines Restes einer CH-aciden Verbindung besitzt,
- L²: C₁-C₆-Alkyl, Halogen, gegebenenfalls durch Phenyl oder C₁-C₄-Alkoxy substituiertes C₁-C₆-Alkoxy,
- L³: Cyano, C₁-C₄-Alkoxycarbonyl oder Nitro,
- R¹ und R²: unabhängig voneinander jeweils Wasserstoff, gegebenenfalls substituiertes C₁-C₆-Alkyl, das durch 1 oder 2 Sauerstoffatome in Etherfunktion unterbrochen sein kann, oder C₃-C₆-Alkenyl,
- R³: Wasserstoff, C₁-C₆-Alkyl oder C₁-C₆-Alkoxy und
- R⁴: Wasserstoff, C₁-C₆-Alkyl, C₁-C₆-Alkoxy, C₁-C₆-Alkylsulfonylamino oder gegebenenfalls substituiertes C₁-C₆-Alkanoylamino bedeuten.

Besonders geeignete Methinfarbstoffe gehorchen der Formel VIa oder VIb, worin R⁵ Methyl bedeutet.

Besonders geeignete Methinfarbstoffe gehorchen weiterhin der Formel VIa oder VIb, worin Q⁵ Cyano bedeutet.

Besonders geeignete Methinfarbstoffe gehorchen weiterhin der Formel VIa oder VIb, worin Q⁴ Sauerstoff bedeutet.

Besonders geeignete Methinfarbstoffe gehorchen weiterhin der Formel VIa, in der X Stickstoff bedeutet.

Besonders geeignete Methinfarbstoffe gehorchen weiterhin der Formel VIb, in der X CH bedeutet.

Besonders geeignete Methinfarbstoffe gehorchen weiterhin der Formel VIa oder VIb, worin Q² einen Rest aus der Pyrrol-, Thiazol-, oder Thiophenreihe bedeutet.

Besonders geeignete Methinfarbstoffe gehorchen weiterhin der Formel VIa, worin Q¹ C₁-C₁₂-Alkyl, des gegebenenfalls durch C₁-C₆-Alkanoyloxy, C₁-C₈-Alkoxycarbonyl, deren Alkylkette jeweils durch 1 oder 2 Sauerstoffatome in Etherfunktion unterbrochen sein kann, Phenyl oder C₁-C₄-Alkylphenyl substituiert ist und durch 1 oder 2 Sauerstoffatome in Etherfunktion unterbrochen sein kann, bedeutet.

Besonders geeignete Methinfarbstoffe gehorchen weiterhin der Formel VIb, worin Q⁶ einen Rest der Formel NE²E³ bedeutet, wobei E² und E³ unabhängig voneinander jeweils für gegebenenfalls substituiertes C₁-C₁₂-Alkanoyl oder gegebenenfalls substituiertes Benzoyl oder E² auch für Wasserstoff stehen.

Besonders hervorzuheben sind Methinfarbstoffe der Formel VIb, worin Q⁶ einen Rest der Formel NE²E³ bedeutet, wobei E² und E³ unabhängig voneinander jeweils für C₁-C₈-Alkanoyl oder Benzoyl oder E² auch für Wasserstoff stehen.

Weiterhin besonders hervorzuheben sind Methinfarbstoffe der Formel VIa worin Q¹ Alkyl, Alkoxyalkyl, Alkanoyloxyalkyl oder Alkoxycarbonylalkyl, wobei diese Reste jeweils bis zu 12 Kohlenstoffatome aufweisen, gegebenenfalls durch Methyl substituiertes Benzyl oder gegebenenfalls durch Methyl substituiertes Phenyl bedeutet.

Weiterhin besonders hervorzuheben sind Methinfarbsotffe der Formel VIa oder VIb, worin Q² einen Rest der obengenannten Formel VIIa oder VIIc, dabei insbesondere VIIa, bedeutet, wobei
- E⁴ und E⁵: unabhängig voneinander für Alkyl, Alkoxyalkyl, Alkanoyloxyalkyl oder Alkoxycarbonylalkyl, wobei diese Reste jeweils bis zu 12 Kohlenstoffatome aufweisen, Wasserstoff, gegebenenfalls durch Methyl substituiertes Benzyl oder gegebenenfalls durch Methyl substituiertes Phenyl,
- E⁶: für Wasserstoff, C₁-C₄-Alkyl, gegebenenfalls durch C₁-C₄-Alkyl oder C₁-C₄-Alkoxy substituiertes Phenyl, Benzyl oder Thienyl,
- E⁹: für Cyano,
- E¹⁰: für Halogen, Wasserstoff, C₁-C₄-Alkyl, C₁-C₄-Alkoxy, C₁-C₄-Alkylthio, gegebenenfalls durch C₁-C₄-Alkyl substituiertes Phenyl oder Thienyl und
- n: für 0 stehen.

Die Monoazofarbstoffe der Formel I sind an sich bekannt und in großer Zahl beschrieben, z.B. in K. Venkataraman "The Chemistry of Synthetic Dyes", Vol. VI, Academic Press, New York, London, 1972, oder in der US-A-5 283 326.

Die Anthrachinonfarbstoffe der Formel IVa bis IVc sind ebenfalls an sich bekannt und z.B. in D.R. Waring, G. Hallas "The Chemistry and Application of Dyes", Seiten 107 bis 118, Plenum Press, New York, London, 1990, beschrieben.

Die Cumarinfarbstoffe der Formel Va bis Vc sind ebenfalls an sich bekannt und z.B. in Ullmanns Encyklopädie der technischen Chemie, 4. Auflage, Band 17, Seite 469, beschrieben.

Die Methinfarbstoffe der Formel VIa und VIb sind ebenfalls an sich bekannt und z.B. in der US-A-5 079 365 sowie WO-A-92/19 684 beschrieben.

Geeignete Harze, die in den erfindungsgemäßen Farbstoffpräparationen zur Anwendung gelangen können, sind beispielsweise Harzmischungen, enthaltend neutrale Harze, die polare Gruppen, z.B. Hydroxygruppen, aufweisen, und 33 bis 66 Gew.-%, bezogen auf das Gewicht der neutralen Harze, saure Harze, wobei solche Mischungen bevorzugt sind, in denen der neutrale Anteil höher ist als der saure.

Die neutralen Harze können ein relativ niederes Molekulargewicht aufweisen und über einen großen Anteil an Alkyl-, Aryl- oder Aralkyleinheiten und über einen kleinen Anteil an Einheiten mit einer oder mehreren Hydroxygruppen verfügen. Beispielsweise kann das neutrale Harz ein Copolymerisat aus Styrol und Allylalkohol sein, in dem die Styrol- und Allylalkoholeinheiten im Gewichtsverhältnis von ca. 2 : 1 vorliegen und das ein Molekulargewicht von 1200 bis 1600 aufweist. Es sollte außerdem in Alkoholen, Estern oder Ketonen löslich sein und einen Erweichungspunkt von ca. 95 bis 100°C aufweisen.

Das neutrale Harz kann mit einem sauren Harz gemischt werden, das einen maximalen Farbwert von 7 (gemäß DIN 6162), eine Säurezahl von 10 bis 100, vorzugsweise ca. 80, und einen Erweichungspunkt von 90 bis 95°C aufweist. Solche sauren Harze stammen z.B. aus der Alkyd- oder Polyesterreihe und sind löslich in Alkoholen oder Estern und mit Nitrocellulose oder Schellack verträglich. Die Anwendung von sauren Harzen mit der obengenannten Säurezahl erleichtert das Auflösen des Farbstoffs, verstärkt seine Farbe und verleiht letztlich der Kugelschreiberpaste vorteilhafte Schreibeigenschaften. Dadurch wird auch ein teilweiser Ersatz des Polymers durch plastifizierende Öle des Fettsäuretyps ermöglicht.

Die Harzmischung kann weiterhin 1 bis 10 Gew.-%, bezogen auf das Gewicht der Mischung, eines Fließverbesserungsmittels enthalten, das die Farbe der fertigen Kugelschreiberpaste nicht beeinflußt. Solche Mittel sind z.B. Harze mit basischen Gruppen, z.B. Polyvinylpyrrolidon mit einem Molekulargewicht von mindestens 200 000.

Erfindungsgemäß weisen die neuen Farbstoffpräparationen, jeweils bezogen auf das Gewicht der Farbstoffpräparationen, 1 bis 50 Gew.-%, vorzugsweise 5 bis 15 Gew.-%, eines oder mehrerer Farbstoffe und 50 bis 99 Gew.-%, vorzugsweise 85 bis 95 Gew.-%, mindestens eines Harzes auf.

Die neuen wasserfreien Farbstoffpräparationen können vorteilhaft erhalten werden, wenn man die Farbstoffe in Form eines verdünnungsmittelhaltigen Preßkuchens, dessen Farbstoffgehalt 50 bis 90 Gew.-% beträgt, oder in Form eines Pulvers bei einer Temperatur von 90 bis 130°C unter gleichzeitiger Entfernung des Verdünnungsmittels in das Harz einknetet und das resultierende Gemisch danach einer Mahlung unterwirft.

Ein besonders geeignetes Verdünnungsmittel ist Wasser.

Das Herstellverfahren für die erfindungsgemäßen Farbstoffpräparationen kann z.B. nach der in der US-A-5 139 916 beschriebenen Methode vorgenommen werden.

Die erfindungsgemäßen Farbstoffpräpartaionen eignen sich vorteilhaft zur Herstellung von Kugelschreiberpasten.

Demgemäß betrifft die vorliegende Erfindung weiterhin Kugelschreiberpasten, die, jeweils bezogen auf das Gewicht der Kugelschreiberpaste, 10 bis 50 Gew.-% einer oben näher bezeichneten wasserfreien Farbstoffpräparationen sowie 50 bis 90 Gew.-% mindestens eines Verdünnungsmittels, ausgewählt aus der Gruppe, bestehend aus Benzylalkohol, Tridecanol, Isotridecanol, Glykolethern, Olein, Phthalsäure-C₄-C₁₃-dialkylestern, C₅-C₃₀-Chloralkanen, C₁-C₂₀-Diphenylalkanen, C₁-C₁₀-Dialkylnaphthalinen und teilhydriertem Terphenyl, enthalten und eine Viskosität bei 20°C von 8 bis 15 Pa·s aufweisen. Als weitere Bestandteile können z.B. die oben beschriebenen Harze in Betracht kommen.

Geeignete Verdünnungsmittel für die erfindungsgemäßen Kugelschreiberpasten sind z.B. Benzylalkohol, Tridecanol, Isotridecanol, Glykolether, wie 2-Methoxyethanol, 2-Ethoxyethanol, 2-Propoxyethanol, 2-Isopropoxyethanol, 2-Butoxyethanol, 2-Phenoxyethanol, 1,2-Dimethoxyethan, 1,2-Diethoxyethan, 1,2-Dipropoxyethan, 1,2-Diisopropoxyethan, 1-2-Dibutoxyethan, 1,2-Diphenoxyethan, 2- oder 3-Methoxypropanol, 2- oder 3-Ethoxypropanol, 2- oder 3-Isopropoxypropanol, 2- oder 3-Butoxypropanol, 2- oder 3-Phenoxypropanol, 1,2- oder 1,3-Dimethoxypropan, 1,2- oder 1,3-Diethoxypropan, 1,2- oder 1,3-Dipropoxypropan, 1,2- oder 1,3-Diisopropoxypropan, 1,2- oder 1,3-Dibutoxypropan oder 1,2- oder 1,2-Diphenoxypropan, Olein, Phthalsäure-C₄-C₁₃-dialkylester, wie Dibutylphthalat, Diisobutylphthalat, Di-sec-butylphthalat, Dipentylphthalat, Diisopentylphthalat, Dihexylphthalat, Diheptylphthalat, Dioctylphthalat, Diisooctylphthalat, Bis(2-ethylhexyl)phthalat, Diisononylphthalat, Didecylphthalat, Diisodecylphthalat, Diundecylphthalat, Didodecylphthalat, Ditridecylphthalat oder Diisotridecylphthalat, C₅-C₃₀-Chloralkane, wie Chloreicosan oder Chlortetracosan, C₁-C₂₀-Diphenylalkane, wie Diphenyldecan oder Diphenyltetradecan, C₁-C₁₀-Dialkylnaphthaline, wie Diisopropylnaphthalin, teilhydriertes Terphenyl, wie Verbindungen der Formel 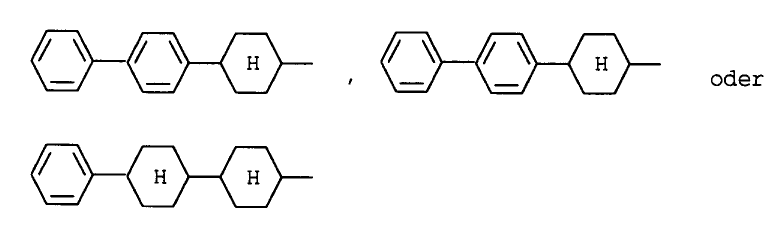
oder Mischungen dieser Mittel.

Bevorzugt sind Kugelschreiberpasten, enthaltend als Verdünnungsmittel mindestens ein Produkt, ausgewählt aus der Gruppe, bestehend aus Benzylalkohol, Tridecanol, Isotridecanol, Glykolmonoethern, Olein, Phthalsäure-C₄-C₁₃-dialkylester und C₁-C₁₀-Dialkylnaphthalinen.

Besonders bevorzugt sind Kugelschreiberpasten, enthaltend als Verdünnungsmittel mindestens ein Produkt, ausgewählt aus der Gruppe, bestehend aus Benzylalkohol, 2-Phenoxyethanol, Olein, Phthalsäure-C₈-dialkylester und Diisopropylnaphthalin.

Die neuen Kugelschreiberpasten weisen, jeweils bezogen auf das Gewicht der Kugelschreiberpasten, einen Gehalt von 10 bis 50 Gew.-%, vorzugsweise 20 bis 40 Gew.-%, an der oben näher bezeichneten Farbstoffpräparation sowie 50 bis 90 Gew.-%, vorzugsweise 40 bis 70 Gew.-%, an Verdünnungsmittel auf. Ihre Viskosität bei 20°C beträgt 8 bis 15 Pa·s, vorzugsweise 10 bis 13 Pa·s.

Die neuen Kugelschreiberpasten können durch Vermischung der oben näher bezeichneten Farbstoffpräparation mit dem Verdünnungsmittel erhalten werden.

Sie weisen eine hohe Lagerstabilität auf, zeichnen sich durch hohe Staubarmut aus und sind für den Anwender leicht verarbeitbar.

Die folgenden Beispiele sollen die Erfindung näher erläutern.

### Herstellung der Farbstoffpräparationen

### Beispiel 1

180 g eines handelsüblichen Phthalatharzes (Säurezahl: 80) wurden bei 90°C 15 min innig durchgeknetet. Dazu wurden 20 g des Farbstoffs der Formel 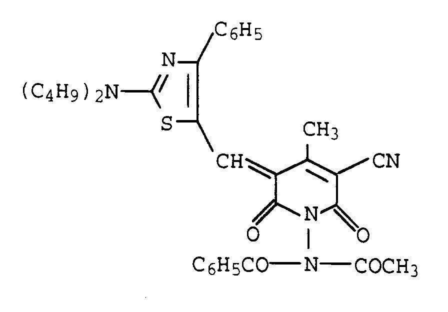
in Form eines Pulvers portionsweise zugegeben.

Nach 15 minütigem Kneten bei 90° wurde die Temperatur auf 60°C reduziert und weitere 60 min geknetet, um eine bessere Verteilung des Farbstoffes zu erreichen. Anschließend ließ man abkühlen und die resultierende Präparation wurde fein gemahlen.

Analog Beispiel 1 werden Farbstoffpräparationen mit den folgenden Farbstoffen erhalten.

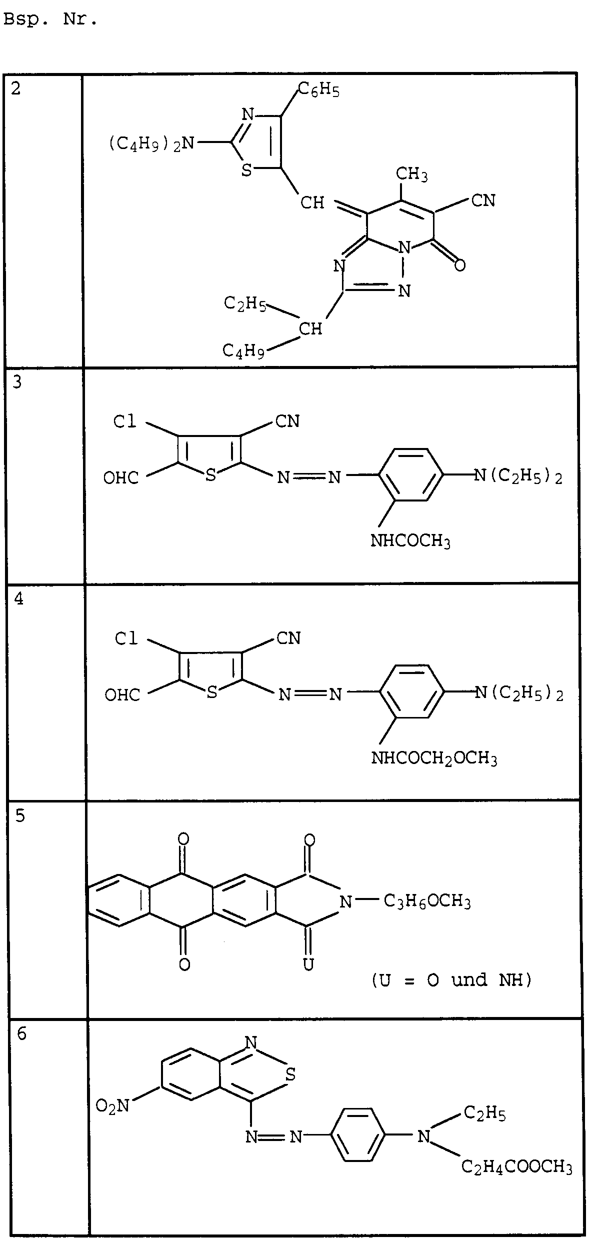

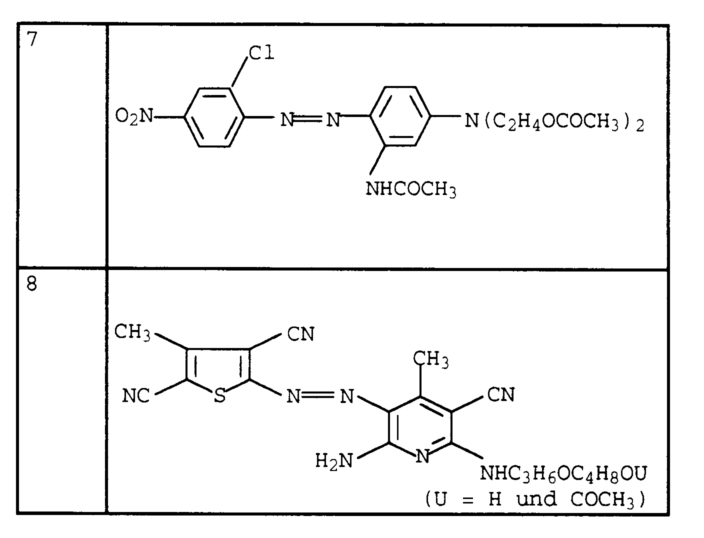

### Herstellung der Kugelschreiberpasten

### Beispiel 9

50 g der in Beispiel 1 beschriebenen Farbstoffpräparation wurden in 50 g einer Mischung aus 2-Phenoxyethanol und Benzylalkohol (1 : 1 w/w) gelöst.

Man erhielt eine Paste, die bei 20°C eine Viskosität von 12 Pa·s aufweist und sich vorteilhaft als Kugelschreiberpaste eignet.

### Beispiel 10

Man verfuhr analog Beispiel 9, verwendete jedoch 50 g der in Beispiel 2 beschriebenen Farbstoffpräparation.

Man erhielt eine Paste, die bei 20 % eine Viskosität von 11 Pa·s aufweist und sich ebenfalls vorteilhaft als Kugelschreiberpaste eignet.

### Beispiel 11

Man verfuhr analog Beispiel 9, verwendete jedoch 50 g der in Beispiel 5 beschriebenen Farbstoffpräparation.

Man erhielt eine Paste, die bei 20°C eine Viskosität von 13 Pa·s aufweist und sich ebenfalls vorteilhaft als Kugelschreiberpaste eignet.

## Patentansprüche

1. Wasserfreie Farbstoffpräparationen, enthaltend, jeweils bezogen auf das Gewicht der Farbstoffpräparationen,
a) 1 bis 50 Gew.-% mindestens eines Farbstoffs aus der Klasse der Monoazofarbstoffe, die frei sind von ionischen Gruppen und die, sofern sie polymerisierbare Gruppen im Molekül aufweisen, in monomerer Form vorliegen, der Anthrachinonfarbstoffe, der Cumarinfarbstoffe oder der Methinfarbstoffe, und
b) 50 bis 99 Gew.-% mindestens eines Harzes.

2. Wasserfreie Farbstoffpräparationen nach Anspruch 1, enthaltend mindestens einen Monoazofarbstoff mit einer Diazokomponente, die sich von einem Anilin oder von einem fünfgliedrigen aromatischen heterocyclischen Amin ableitet, das ein bis drei Heteroatome, ausgewählt aus der Gruppe, bestehend aus Stickstoff, Sauerstoff und Schwefel, im heterocyclischen Ring aufweist und durch einen Benzol-, Thiophen, Pyridin- oder Pyrimidinring anelliert sein kann.

3. Wasserfreie Farbstoffpräparationen nach Anspruch 1, enthaltend mindestens einen Monoazofarbstoff mit einer Kupplungskomponente aus der Anilin-, Aminonaphthalin-, Aminothiazol-, Diaminopyridin- oder Hydroxypyridonreihe.

4. Wasserfreie Farbstoffpräparationen nach Anspruch 1, enthaltend mindestens einen Anthrachinonfarbstoff der Formel IVa, IVb, IVc oder IVd 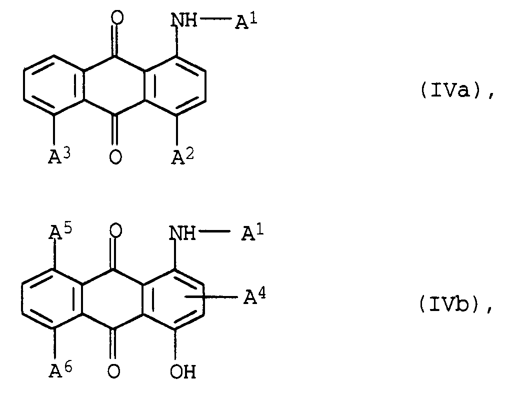 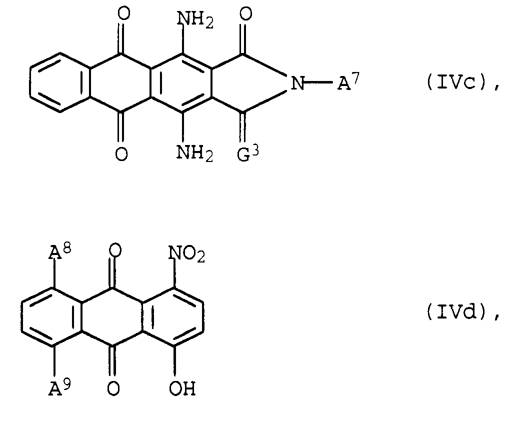 worin
A¹ Wasserstoff, C₁-C₈-Alkyl oder gegebenenfalls substituiertes Phenyl,
A² Hydroxy oder den Rest NH-A¹,
A³ Wasserstoff oder Nitro,
A⁴ Halogen, Hydroxyphenyl, C₁-C₄-Alkoxyphenyl oder einen Rest der Formel 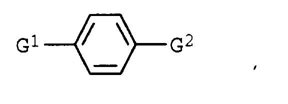 worin
G¹ für Sauerstoff oder Schwefel und
G² für Wasserstoff oder C₁-C₈-Monoalkylsulfamoyl, dessen Alkylkette durch 1 oder 2 Sauerstoffatome in Etherfunktion unterbrochen sein kann, stehen,
einer der beiden Reste A⁵ und A⁶ Hydroxy und der andere den Rest NH-A¹,
A⁷ Wasserstoff oder C₁-C₈-Alkyl, das gegebenenfalls durch 1 bis 3 Sauerstoffatome in Etherfunktion unterbrochen ist,
einer der beiden Reste A⁸ und A⁹ Hydroxy und der andere Anilin und
G³ Sauerstoff oder Imino bedeuten.

5. Wasserfreie Farbstoffpräparationen nach Anspruch 1, enthaltend mindestens einen Cumarinfarbstoff der Formel Va, Vb oder Vc 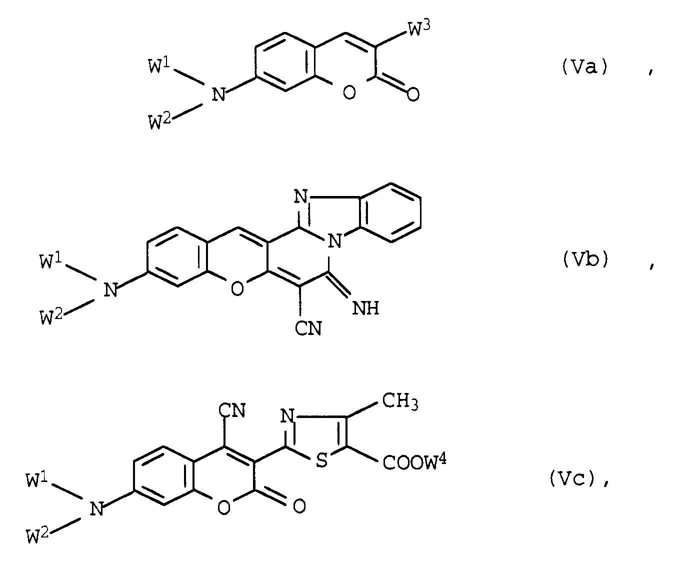 worin
W¹ und W² unabhängig voneinander jeweils C₁-C₄-Alkyl,
W³ Benzimidazol-2-yl, 5-Chlorbenzoxazol-2-yl, Benzthiazol-2-yl, 4-Hydroxychinazolin-2-yl oder 5-Phenyl-1,3,4-thiadiazol-2-yl und
W⁴ C₁-C₈-Alkyl bedeuten.

6. Wasserfreie Farbstoffpräparationen nach Anspruch 1, enthaltend mindestens einen Methinfarbstoff der Formel VIa oder VIb 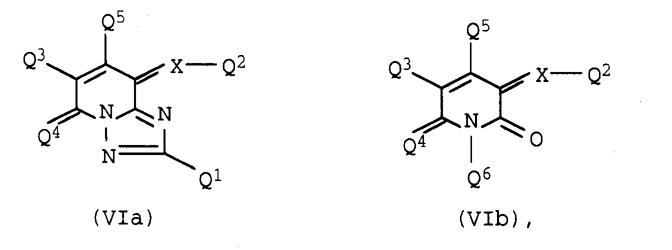 worin
X Stickstoff oder CH,
Q¹ C₁-C₂₀-Alkyl, das gegebenenfalls substituiert ist und durch ein oder mehrere Sauerstoffatome in Etherfunktion unterbrochen sein kann, gegebenenfalls substituiertes Phenyl oder Hydroxy,
Q² einen 5-gliedrigen aromatischen heterocyclischen Rest,
Q³ Wasserstoff, Cyano, Carbamoyl, Carboxyl oder C₁-C₄-Alkoxycarbonyl,
Q⁴ Sauerstoff oder einen Rest der Formel C(CN)₂, C(CN)COOE¹ oder C(COOE¹)₂, wobei E¹ jeweils für C₁-C₈-Alkyl, das gegebenenfalls durch 1 oder 2 Sauerstoffatome in Etherfunktion unterbrochen ist, steht,
Q⁵ Wasserstoff oder C₁-C₄-Alkyl,
Q⁶ C₁-C₂₀-Alkyl, das gegebenenfalls substituiert ist und durch ein oder mehrere Sauerstoffatome in Etherfunktion unterbrochen sein kann, gegebenenfalls substituiertes Phenyl, Hydroxy oder einen Rest der Formel NE²E³, wobei E² und E³ gleich oder verschieden sind und unabhängig voneinander jeweils für Wasserstoff, gegebenenfalls substituiertes C₁-C₁₂-Alkyl, C₅-C₇-Cycloalkyl, gegebenenfalls substituiertes Phenyl, gegebenenfalls substituiertes Pyridyl, gegebenenfalls substituiertes C₁-C₁₂-Alkanoyl, C₁-C₁₂-Alkoxycarbonyl, gegebenenfalls substituiertes C₁-C₁₂-Alkylsulfonyl, C₅-C₇-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder E² und E³ zusammen mit dem sie verbindenden Stickstoffatom gegebenenfalls durch C₁-C₄-Alkyl substituiertes Succinimido, gegebenenfalls durch C₁-C₄-Alkyl substituiertes Phthalimido oder einen fünf-oder sechsgliedrigen gesättigten heterocyclischen Rest, der gegebenenfalls weitere Heteroatome enthält, stehen, bedeuten.

7. Verfahren zur Herstellung der wasserfreien Farbstoffpräparationen gemäß Anspruch 1, dadurch gekennzeichnet, daß man die Farbstoffe in Form eines verdünnungsmittelhaltigen Preßkuchens, dessen Farbstoffgehalt 50 bis 90 Gew.-% beträgt, oder in Form eines Pulvers bei einer Temperatur von 90 bis 130°C unter gleichzeitiger Entfernung des Verdünnungsmittels in das Harz einknetet und das resultierende Gemisch danach einer Mahlung unterwirft.

8. Verwendung der wasserfreien Farbstoffpräparationen gemäß Anspruch 1 zur Herstellung von Kugelschreiberpasten.

9. Kugelschreiberpasten, die, jeweils bezogen auf das Gewicht der Kugelschreiberpaste, 10 bis 50 Gew.-% einer wasserfreien Farbstoffpräparation gemäß Anspruch 1 sowie 50 bis 90 Gew.-% mindestens eines Verdünnungsmittels, ausgewählt aus der Gruppe, bestehend aus Benzylalkohol, Tridecanol, Isotridecanol, Glykolethern, Olein, Phthalsäure-C₄-C₁₃-dialkylestern, C₅-C₃₀-Chloralkanen, C₁-C₂₀-Diphenylalkanen, C₁-C₁₀-Dialkylnaphthalinen und teilhydriertem Terphenyl, enthalten und eine Viskosität bei 20°C von 8 bis 15 Pa·s aufweisen.
